# EUROPEAN PATENT APPLICATION

(11) **EP 3 208 524 A1**
(43) Date of publication of application: **23.08.2017**
(21) Application number: 16156772.2
(22) Date of filing: 22.02.2016
(51) Int. Cl.: F21S 8/02, F21V 21/04, H02G 3/12, E04F 13/06

(54) **A PROFILE FOR SEAMLESSLY MOUNTING AN APPARATUS AND A METHOD FOR PERFORMING THE SAME**

(71) Applicant: Frank Sinnaeve Interieur Architectuur bvba, 8630 Veurne (BE); Interieur-Architectuur bvba, 8300 Knokke-Heist (BE)
(72) Inventor: SINNAEVE, Frank, 8630 Veurne (BE); GUNST, Stephan, 8300 Knokke-Heist (BE)
(74) Representative: Gevers Patents

(57) **Abstract**

A profile (20, 30) for seamlessly mounting an apparatus in a stepped extending through a supporting surface (10). The profile (20, 30) comprising a hollow body comprising a stopping flange (21) radially protruding from an outer surface (27) of the hollow body and securing means (35, 37) arranged for securing the profile (20, 30) to the stepped hole of the supporting surface (10). The hollow body of the profile (20, 30) comprises an outer rim (24) arranged, when the stopping flange (21) is in contact with the flange recess (12), for being on substantially the same plane with an edge of the first opening (13), such that the outer rim (24) becomes flush with the front side (11) of the supporting surface (10), when the finishing plaster layer (38) is applied.

## Description

### Technical field

The present invention relates to a profile for seamlessly mounting an apparatus, e.g. a light fixture, a smoke detector, a speaker, and the like, on a supporting surface, such as a wall, ceiling, floor and the like.

The present invention further relates to a method for seamlessly mounting an apparatus on a supporting surface.

### Background art

Profiles or mounting arrangements for mounting an apparatus, such as a lighting fixture, smoke detector, etc., on a supporting surface, such a wall, ceiling, floor, etc. are known in the art. For example, EP2541126 describes a mounting ring arranged for mounting a lighting fixture on a supporting surface. The mounting ring of EP2541126 is provided as a hollow cylindrical body arranged for being secured at a mounting hole provided on the ceiling of a room. Once the mounting ring is positioned in the mounting hole, the apparatus is inserted and secured in the mounting ring. The lighting fixture of EP2541126 is provided with a flange on its periphery, which is arranged for abutting the underside of the ceiling surface when the fixture is inserted into a mounting hole, so as to limit how far the lighting fixture is recessed into the ceiling. As a result, due to the exposed flange, the presence of the lighting fixture is still noticeable after installation. Although, the noticeable presence of the lighting fixture after installation may be satisfactory for some application, it is considered to be highly undesirable in the design of modern architectural spaces, which require the construction of continuous surfaces that remain uninterrupted by the installation of apparatuses such as lighting fixtures and the like.

US5921655 describes a mounting arrangement addressing the above-mentioned drawback. The mounting arrangement of US5921655 is arranged for concealing the flange of the lighting fixture by securing the apparatus on a flange recess of the mounting stepped hole rather than directly on the underside surface of the supporting surface, e.g. ceiling, as in EP2541126. Once the apparatus has been secured, a mask element, which is provided separately and in the same material as the supporting surface, is positioned on top of the flange of the apparatus. The underside surface of the mask element and the underside surface of the supporting surface are made flush by applying a spackling compound, such as plaster, and sanding the compound flat. However, such a mounting arrangement has the drawback of being overly complicated since it requires the production of separately formed mask, which is uniquely formed to match the size and features of the mounting stepped hole and of the supporting surface. Furthermore, the seamlessly integration of the apparatus greatly depends on the skill of the person fitting the apparatus in the stepped hole. For example, after installation the flange of the apparatus may not completely abut the flange recess surface of the stepped hole, resulting in an uneven installation of the mask element. Moreover, cracks in the spackling compound may be formed over time at the location where the mask element and supporting surface are connected. These cracks may be formed over time due to the different expansions rates of the different materials.

### Disclosure of the invention

It is an aim of the present invention to provide a profile for seamlessly mounting an apparatus, e.g, a lighting fixture, speaker, smoke detector, etc. on a supporting surface, such as a wall, ceiling, floor, etc., that overcomes the drawbacks of the prior art.

It is further the aim of the present invention to provide a method for seamlessly mounting such apparatuses on a supporting surface that overcomes the drawbacks of the prior art.

For the purpose of the present invention the term "apparatus" refers to any functional device that can be installed in an interior and/or exterior space, such as a lighting fixture, a smoke detector, a speaker, etc.

For the purpose of the present invention the term "supporting surface" refers to any supporting surface of an interior or exterior space that can be used for the mounting of the above-mentioned apparatuses, For example, the supporting surface may be a panel made of a suitable material that may be used for the construction of a wall, ceiling or floor of a room. The supporting surface may comprise any suitable material known to the skilled person in the art, such as for example a plaster, wood, etc. and can be for example a plasterboard, a plastered supporting surface e.g. plastered brick wall, and the like.

According to a first aspect of the present invention this aim is achieved with the profile showing the technical characteristics of the first claim.

According to an embodiment of the present disclosure a profile for seamlessly mounting an apparatus in a stepped hole extending through a supporting surface may be provided. The stepped hole may be produced by any means known to the skilled person in the art, such as with the use of a drill bit arrangement known from US6893194 or DE19843849. For example the stepped hole may comprise a flange recess located between a first opening edge and a second opening edge located respectively on a front side and a back side of the supporting surface. The front side of the supporting surface may be arranged for receiving a finishing plaster layer or another spackling compound. The profile is provided with a hollow body comprising a stopping flange radially protruding from an outer surface of the hollow body and arranged for, when the hollow body is inserted through the stepped hole, abutting the flange recess of the stepped hole. According to embodiments of the present invention, the hollow body of the profile may be provided in any shape known to the skilled person in the art, such as circular, rectangular, square, etc. Securing means are provided for securing the profile to the stepped hole of the supporting surface. The hollow body of the profile is provided with an outer rim arranged, when the stopping flange is in contact with the flange recess, for being on substantially the same plane with an edge of the first opening, such that the outer rim becomes flush with the front side of the supporting surface, when the finishing plaster layer is applied.

It has been found that by providing the outer rim on the outer surface of the hollow body, this may contribute to the quicker and more accurate alignment of the profile with the front side of the supporting surface. The outer rim may function as an alignment reference point, which enables to quickly and more accurately determine to what extent the profile has been correctly positioned with respect to the front side of the supporting surface prior to the application of the plaster layer. Once the alignment of the profile with the front surface of the supporting surface has been confirmed, the plaster layer may be applied on top of the stopping flange and/or the supporting surface so as to conceal the exposed stopping flange and create a flush finish between the outer rim and the front side of the supporting surface. As a result, the noticeability of the installation of the profile may significantly be reduced or completely eliminated, thereby adhering to the requirements of the design of modern architectural spaces. Therefore, the profile of the present invention provides greatly reduces the time and skill required for seamlessly mounting an apparatus in comparison to the prior art solutions. Furthermore, the profile of the present invention may be fixed on the front side of the supporting surface. This is in contrast to the solutions of the prior art where the profile is mounted on the back side of the supporting surface. As a result, the profile may be mounted on the supporting surface after the installation or construction of the supporting surface has taken place, thereby further reducing the time and skill required to seamlessly mounting an apparatus.

According to an embodiment of the present invention, the stopping flange comprises a plurality of through holes arranged for cooperating with the securing means so as to secure the profile to the stepped hole. According to embodiments of the present invention, the securing means may comprise an adhesive material provided between the flange recess surface and a back surface of the stopping flange surface, which back surface is arranged for abutting the flange recess surface. In this case, the adhesive material would be compressed when the stopping flange comes in contact with the back surface of the stopping flange, thereby causing some of the adhesive material to leak to the front surface of the stopping flange, which is located opposite the back surface of the stopping flange, through the holes provided on the stopping flange. As a result, by providing the through holes on the stopping flange the bonding surface area between the flange recess and the stopping flange is significantly increased. Therefore, the through holes in combination with the adhesive layer may significantly improve the adherence of the stopping flange to the flange recess, resulting in the better fixation of the profile to the stepped hole of the supporting material. Moreover, it has been found that the use of an adhesive may further improve the alignment accuracy between the outer rim and the front side of the supporting surface. For example, once the profile has been positioned in the stepped hole, a tool, such as level, may be used for gently applying pressure on the profile, thereby finely adjusting the depth of the profile in the stepped hole until the outer rim is substantially on the same plane as the front side of the supporting in all directions.

According to embodiments of the present invention the securing means may comprise at least one, preferably a plurality of, screws arranged for cooperating with at least some of the though holes provided on the stopping flange for securing the profile on the stepped hole by screwing the stopping flange on the flange recess of the stepped hole. It has been found that the provision of screws may significantly increase the fixation of the profile to the stepped hole. For example, screws may be used, in combination with the adhesive material, for securing a large dimension profile on the stepped hole of the supporting surface for seamlessly mounting large dimension apparatuses, such as recessed office lighting fixtures, or other apparatuses requiring a large dimensions profile. By using screws or other related securing means known to skilled person, a drop of the profile below the front side of the supporting surface may be prevented.

According to embodiments of the present invention, the stopping flange comprises a plurality of protrusions arranged for extending outwardly from a front surface of the stopping flange. The protrusions are arranged for cooperating with the plaster layer so as to improve the fixation of the profile to the stepped hole. It has been found that by providing the protrusions on the stopping flange, the surface area of the stopping flange on which the plaster layer can adhere to may be significantly increased. As a result, the fixation of the profile to the stepped hole may be significantly increased. The protrusions may act as reinforcement elements for reinforcing the plaster layer, thereby creating a strong bond between the plaster layer and the profile, which may significantly improve the fixation of the profile to the stepped hole. It has further been found that the provision of protrusions on the stopping flange may greatly reduce or completely eliminate the presence of cracks on the plaster layer, which may form over time. This is because, with the provision of protrusions, the top surface of the stopping flange may be divided into smaller compartments, which may be subsequently filled with the plaster layer or another spackiling compound. The plaster layer provided in the compartments between the protrusions would have a higher tensile strength due to its smaller area, in comparison with the plaster layerl provided over a larger are. As a result, due to the formation of small compartment spaces between the protrusions, the tensile strength of the plaster layer may be significantly increased, thereby significantly reducing the formation and/or propagation of cracks in the plaster layer and/or spackling compound in comparison to prior art solutions.

According to embodiments of the present invention, at least some of the protrusions are arranged for extending in a predetermined direction along the front surface of the stopping flange. For example, and without any limitations, the protrusions may longitudinally or radially extend over a predetermined distance along the front surface of the stopping flange. In this way, the surface area of the stopping flange on which the plaster may adhere to may further be increased, resulting in the improvement of the profile fixation to the stepped hole. Furthermore, the protrusions may be provided with a predetermined shape so as to increase the surface area of the stopping flange to which the plaster may adhere, thereby further improving the fixation of the profile to the stepped hole. For example, the protrusions may be arranged for funning out from the front surface of the stopping flange. In this configuration the base of the protrusion, which is connected to the front surface of the stopping flange, may be provided with a smaller diameter than the top of the protrusions. Furthermore, other protrusions configurations may be provided for increasing the surface area of the stopping flange on which the plaster layer may adhere to.

According to embodiments of the present invention, the hollow body comprises a surface, which remains visible after the finishing plaster layer is applied on the front side of the supporting surface. For example, in the case where the profile is used for mounting a lighting fixture, the profile may be provided with a surface either an inner or outer surface, which remains visible after the installation of the profile. According to embodiments of the present invention, the visible surface of the hollow body may be provided with a substantially identical finishing to that of the plaster layer and/or the front side of the supporting surface. For example, the visible surface may be provided with features, e.g. texture, colour, or other desirable features, that match the features of the plaster layer and/or the front side of the supporting surface. It has been found, that by finishing the visible surface of the hollow body of the profile in a substantially similar manner to that of the plaster layer and/or the front side of the supporting surface, the noticeability of the apparatus installation may be further concealed. Furthermore, the visible surface of the profile may be provided with a finishing that is substantially different from the finishing of the plaster layer and/or the front side of the supporting surface. For example, the visible surface may be provided in a material, such as metal, plaster, plastic, etc, that has a different finish, such as texture, colour, reflective properties, etc. with that of the plaster layer and/or the front side of the supporting surface. Moreover, the visible surface of the profile may be coated with a material, e.g. chrome coated, that may have a different finish with that of the plaster layer and/or the front side of the supporting surface.

According to embodiments of the present invention, the profile is arranged for receiving an apparatus, such as a lighting fixture, a smoke detector, a speaker and the like, through at least one opening of the hollow body. For example, the profile may arrange for receiving the electronics of the lighting fixture through a back opening on the hollow body which may be located on the back side of the supporting surface. On another example, the profile may be provided with a mounting element positioned within the hollow body and arranged for receiving an apparatus, such as a smoke detector through a front opening located on the front side of the supporting surface.

According to a second aspect of the present invention, a set of parts may be provided for seamlessly mounting an apparatus on the stepped hole of the supporting surface. The set of parts may comprise a drill arrangement arranged for being connected with a drill device so as to create a stepped hole in the supporting surface. The stepped hole comprises a flange recess located between a first opening and a second opening of the stepped hole. The set of parts may be further provided with a profile according to the first aspect of the invention arranged for being mounted on the stepped hole.

According to third aspect of the present invention, a supporting surface comprising a stepped hole arranged for receiving a profile according to the first aspect of the present invention may be provided. Furthermore, a supporting surface may be provided with a profile according to the first aspect of the present invention.

According to a fourth aspect of the present invention, a method for seamlessly mounting an apparatus on a stepped hole of a supporting surface using a profile according to the first aspect of the present invention may be provided. The method comprises the steps of :
providing a supporting surface comprising a stepped hole comprising a flange recess located between a first opening edge and a second opening edge located respectively on a front side and a back side of the supporting surface, wherein the front side of the supporting surface is arranged for receiving a finishing plaster layer;
providing a profile according to the first aspect of the present invention;
inserting the profile through the stepped hole until the stopping flange abuts the flange recess of the stepped hole and the outer rim of the profile's hollow body is on substantially the same plane as the outer edge of the first opening;
securing the profile on the stepped hole; and
providing a finishing plaster layer on the front side of the supporting surface such that the outer rim becomes flush with the front side of the supporting surface.

According to embodiments of the present invention, the step of securing the profile comprises the step of applying a layer of adhesive in between the surface of the flange recess and the surface of the stopping flange arranged for abutting the flange recess surface. Furthermore, the step of securing may further comprise the step of screwing on at least some of the holes a screw.

### Brief description of the drawings

The invention will be further elucidated by means of the following description and the appended figures.
Figure 1 shows a supporting surface provided with a stepped hole according to embodiments of the present invention.
Figures 2 to 7 show different examples of profiles provided with protrusions according to embodiments of the present invention.
Figures 8 to 13 show different cross-sections of profiles according to embodiments of the present invention.
Figures 14 and 15 show an example of profile mounted with a part of an apparatus according to embodiments of the present invention.
Figures 16 to 23 show the steps of an exemplified method for seamlessly mounting an apparatus on a stepped hole.

### Modes for carrying out the invention

The present invention will be described with respect to particular embodiments and with reference to certain drawings but the invention is not limited thereto but only by the claims. The drawings described are only schematic and are non- limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

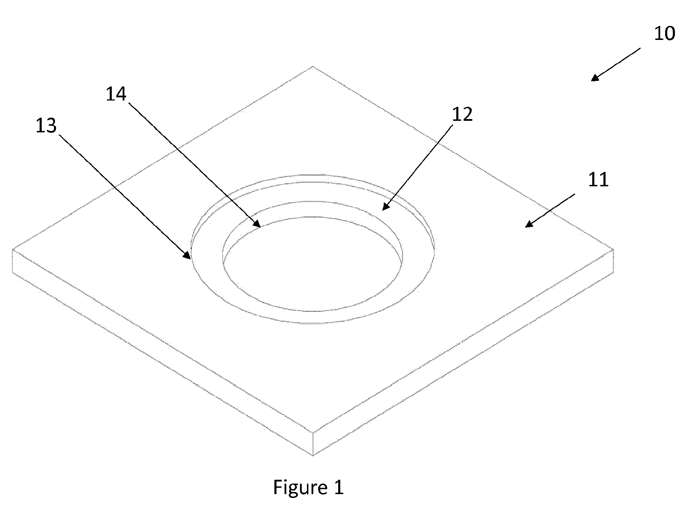

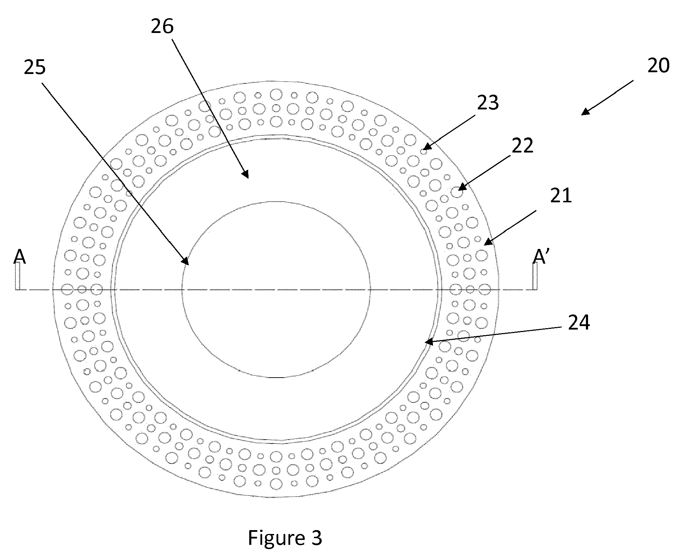

The present invention would be elucidated by means of the exemplified embodiments shown in figures 1 to 23.

Figure 1 shows an example of a support surface 10 provided with a stepped hole comprising a flange recess 12 provided between a first opening edge 13 located at a front side 11 of the supporting surface 10, and second opening 14 located at a back side 18 of the supporting surface 10. The stepped hole may be produced on the supporting surface 10 with any means known to the skilled person in the art. For example, and without any limitation, the stepped hole may be produced by means of a drill bit arrangement, such as the one known from US6893194 or DE19843849, which are incorporated herein by reference. Without any limitation, the stepped hole may have a substantially circular shape, as shown in figure 1. It should be noted that the stepped hole may be provided with any other suitable shape known to the person in the art, such as rectangular, square, and the like. The supporting surface 10 may be a panel arranged for forming at least part of a wall, ceiling, floor or the like, of an interior and/or exterior space. The front side 11 of the supporting surface 10 may be provided with a finishing plaster layer or another spackling compound 38, arranged for finishing off the front side 11 of the supporting surface according to the space design specifications. The plaster layer and/or the spackling compound 38 may be further treated e.g. by sanding, so as to adjust the look and feel of the front side. The front side 11 of the supporting surface may be further arranged for being painted with a desired colour or finished in another material.

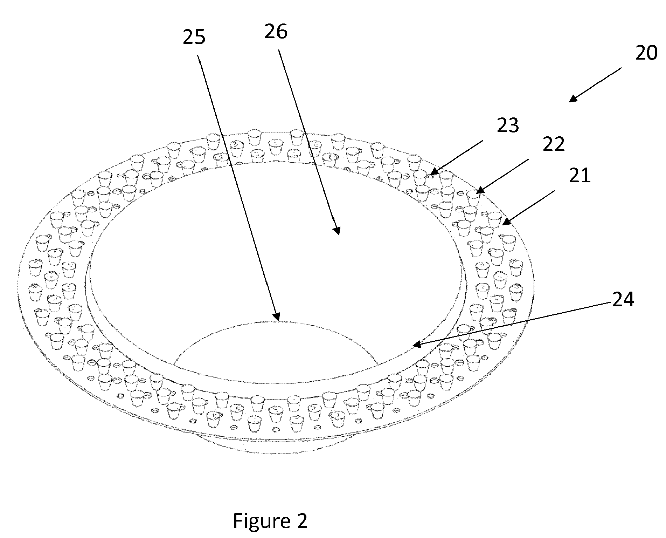

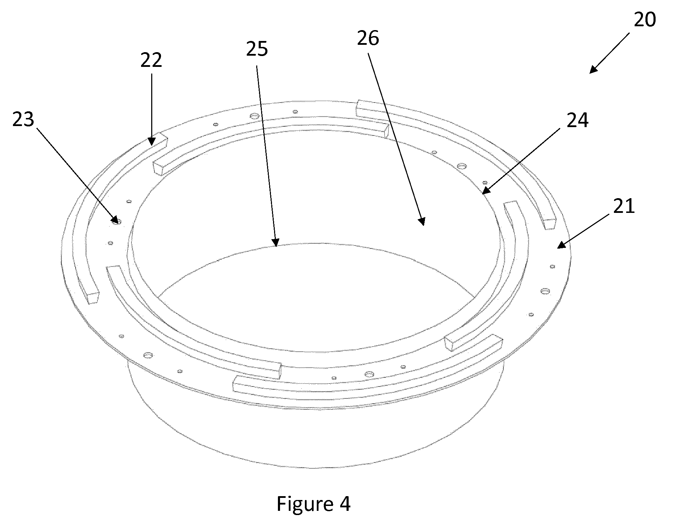

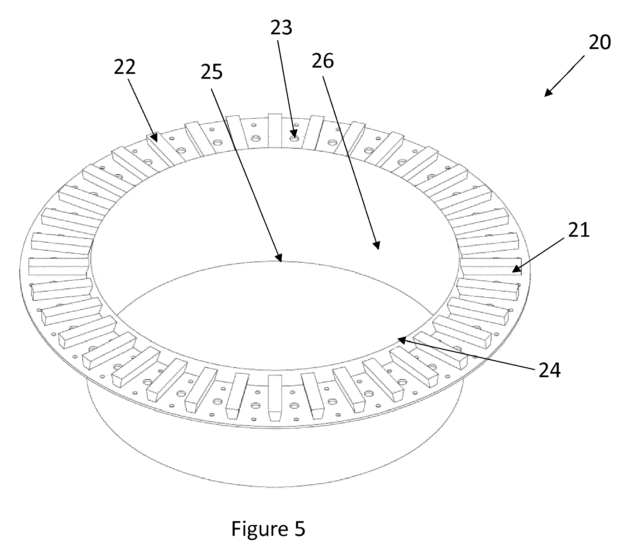

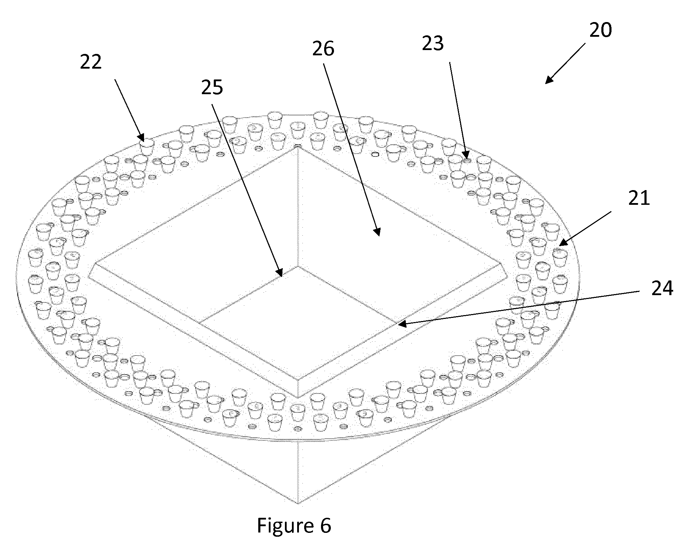

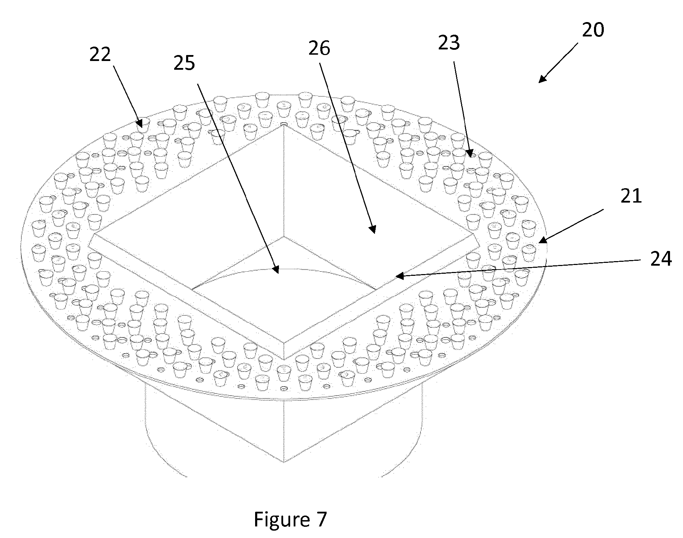

Figure 2 shows an example of a profile 20 for seamlessly mounting an apparatus, such as a lighting fixture, speaker, smoke detector etc. on the stepped hole of the supporting surface 10 of figure 1. The profile 20 comprises a hollow body provided with a stopping flange 21, which is arranged for radially protruding from an outer surface 27 of the hollow body. The flange recess may be provided with a back surface 28 arranged, when the hollow body is inserted through the stepped hole, for abutting a surface of the flange recess 12 of the stepped hole. The profile 20 may be provided with an outer rim 24, which may be arranged when the stopping flange 21 is in contact with the flange recess 12, for being on substantially the same plane with an edge of the first opening 13, such that the outer rim 24 becomes flush with the front side 11 of the supporting surface 10, when the finishing plaster layer and/or spackling compound is applied. The plaster layer may be applied over the front side 11 of the supporting surface 10, thereby covering the stopping flange 21 of the profile, and up to the outer rim, so as to create a continuous surface between the profile 20 and the front side 11 of the supporting surface 10. Furthermore, the plaster layer and/or the spackling compound may be applied only on top of the stopping flange 21, so as to create a continuous surface between the profile 20 and the front side 11 of the supporting surface 10. As previously discussed, the outer rim 24 may be used as an alignment reference point for quickly aligning the profile with the front side 11 of the supporting surface so that when the plaster layer and/or spackling compound 38 is applied on the stopping flange and/or the front side 11 of the supporting surface, the outer rim 24 becomes flush with the front side 11 of the supporting surface 10. The stopping flange 21 may be provided with a plurality of through holes, which may extend between the back surface 28 and the front surface, which is located opposite of the back surface 28. The through holes 23 may be arranged for cooperating with securing means for securing the profile 20 on the stepped hole. For example, the through holes 23 may be arranged for cooperating with an adhesive material 35 applied between the back surface 28 of the stopping flange 21 and a surface of the flange recess 12, which is arranged for coming in contact with the back surface 28 of the stopping flange 21. Furthermore, screws 37 may be provided in the through holes 23, which are arranged for being screwed in the flange recess 12 so as to secure the profile 20 to the stepped hole. The stopping flange 21 may be provided with a plurality of protrusions 22 extending outwardly from the front surface of the stopping flange 21. The protrusions 22 may be arranged for being completely covered by the plaster layer and/or spackling compound 38. The protrusions 22 may be arranged for cooperating with the plaster layer and/or spackling compound 38, so as to significantly improve the fixation of the profile 20 to the stepped hole. For example, the protrusions 22 may be provided with a predetermined shape, so as to increase the surface are on which the plaster layer and/or the spackling compound 38 may adhere to, thereby significantly improving the fixation of the profile 20 to the stepper hole. For example, the protrusions 22 may be arranged for funning out from the front surface of the stopping flange 21, such that the base of the protrusion 22 has a smaller diameter the top of the protrusion, as shown in figures 6 to 11. Moreover, in order to further increase the surface area on which the plaster layer and/or spacking compound may adhere to the protrusions 22, the protrusions 22 may be arranged for extending in a predetermined direction along the front surface of the stopping flange 21. For example, the protrusions may extend radially over a predetermined distance along the front surface of the stopping flange 21, as shown in figure 5. In another example, the protrusions 22 may extend longitudinally or circumferentially over a predetermined distance along the front surface of the stopping flange 21, as shown in figure 4. In this way, the surface area of the stopping flange 21 on which the plaster layer 38 may adhere to may further be increased, thereby significantly improving the fixation of the profile 20 to the stepped hole. According to embodiments of the present invention, the profile 20 may be provided with a substantially circular body, as shown in figures 2 to 5. However, the profile 20 may be provided in any shape known to the skilled person in the art. For example, the profile may be provided, without any limitation, with a rectangular or square shape, as shown in figure 6. Furthermore, the profile 20 may be provided with more than one shape. For example, as shown in figure 7, the profile 20 may be provided with a hollow body having a first portion having a first shape, which may extend up to a predetermined distance from the first opening, such as a square shape, a second portion having a second shape, such as circular.

The profile 20 may be provided with a first opening 29 and a second opening 25 may be respectively positioned with respect to the supporting surface, when the profile is positioned in the stepped hole, on the front side 11 and back side 18 of the supporting surface 10. According to embodiments of the present invention, the profile 20 may form part of the apparatus to be installed. For example, in the installation of a lighting fixture, the profile 20 may form the body of the lighting fixture, while the electronics may be received through the second opening 25. In this configuration, a surface 26 of the profile remains visible after the installation of the apparatus. The visible surface 26 may be provided with a substantially similar finish to the plaster layer 38 and/or the front side 11 of the supporting surface, thereby further concealing the presence of the apparatus after installation. Furthermore, the visible surface 26 may be provided with a different finish, such as surface texture, colour, reflective index, etc. to the plaster layer 38 and/or the front side 11 of the supporting surface. For example, and without any limitation, the visible surface 26 may be made or coated with a material that is completely different from the plaster layer, e.g. in the case of a lighting fixture, the profile 20 may be provided with visible surface 26 that is made of a reflective material, such as chrome, aluminium, and the like.

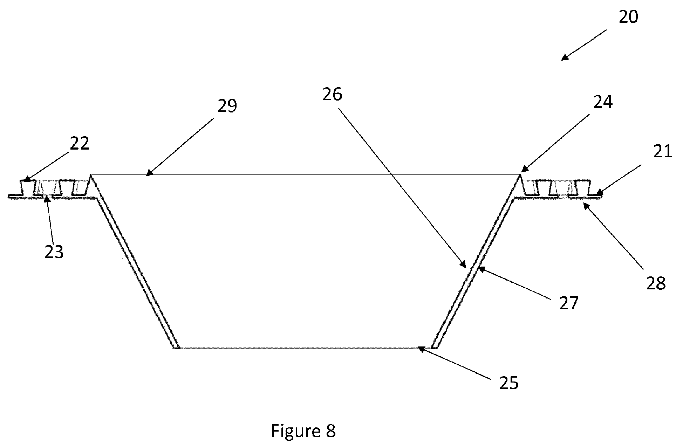

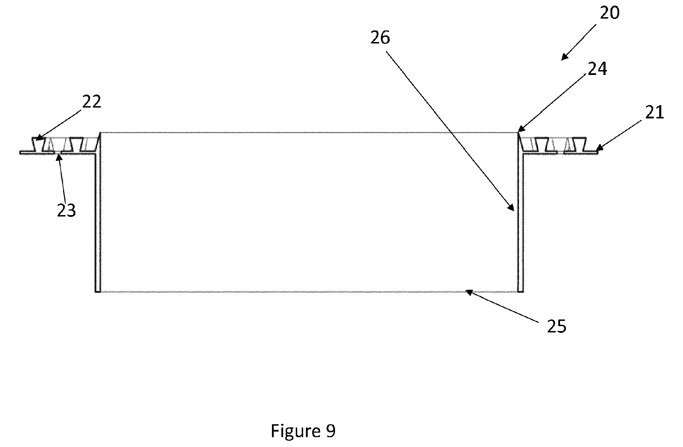

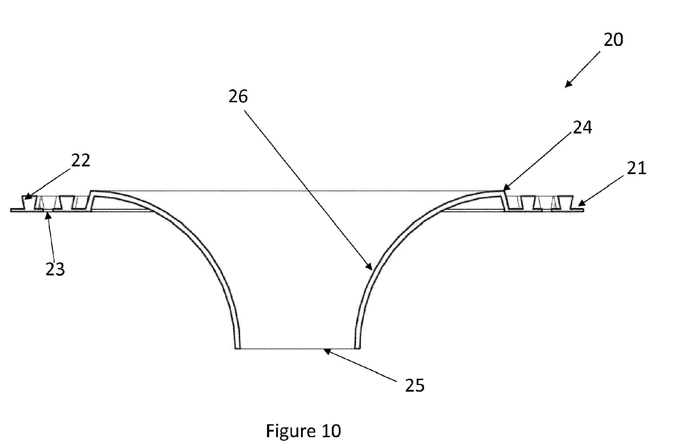

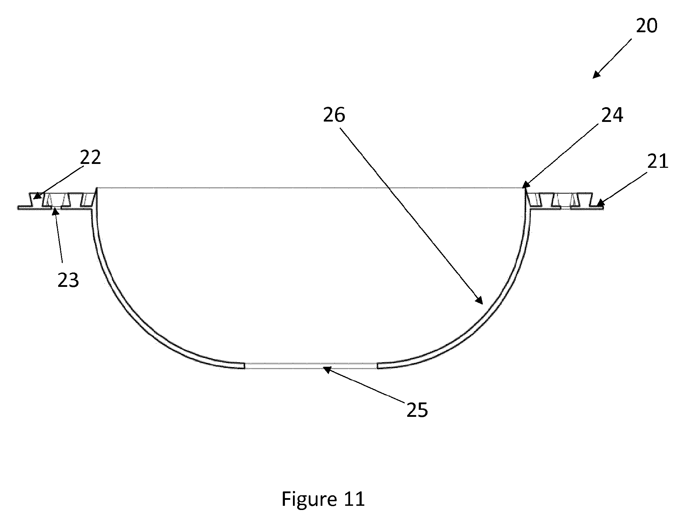

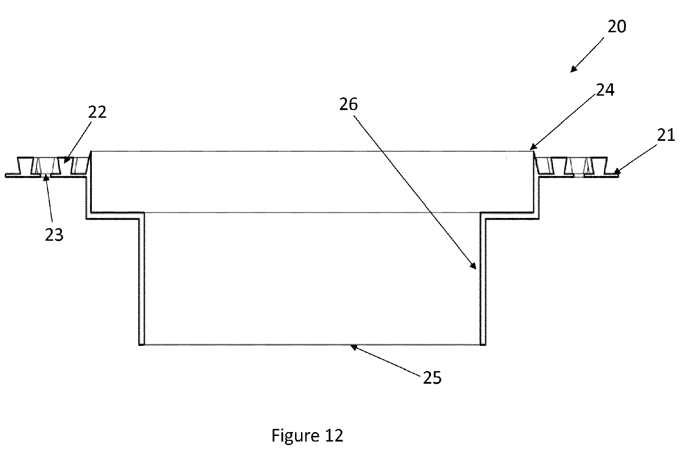

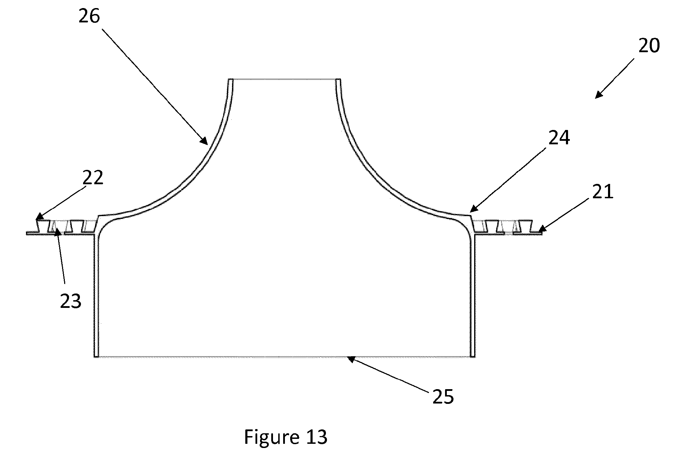

Figures 8 to 13 show cross-sectional views of exemplified embodiments of profiles 20 according to the present invention. Figure 8 shows a profile 20 having a hollow body provided with a first opening 29 having a larger diameter than an opposing second opening 25. Figure 9 shows a profile 20, wherein the first and second openings 29 and 25 are provided with substantially the same diameter. Figure 10 show a profile 20, wherein the visible surface 26 is curved inwardly at a predetermined angle. Figure 11 shows a profile 20, wherein the visible surface 26 is curved outwardly, in the shape of a ball, at a predetermined angle. Figure 12 shows a profile 20 having a stepped visible surface 26. Figure 13 shows a profile, wherein the visible surface 26 extends outwardly from the outer rim 24. It should be noted that the profile may be provided with any desirable shape known to the person in the art and by no way is limited to the shapes shown in the figures.

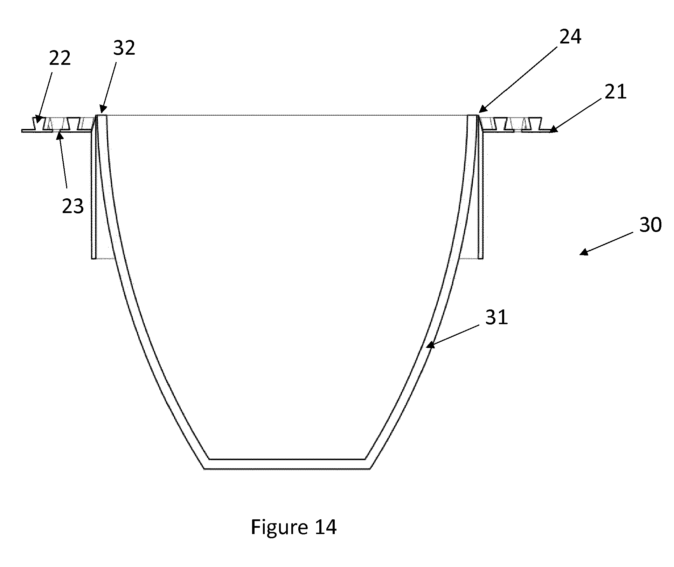

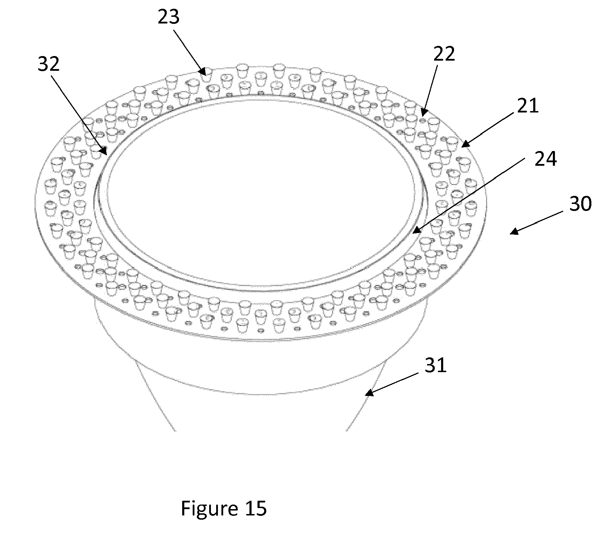

According to embodiments of the present invention, the profile 20 may be arranged for receiving at least part of an apparatus. For example, as shown in the figures 14 and 15, in the installation of a lighting fixture, a first part of the apparatus 31, such as the body of the lighting fixture, may be received through the first opening 29, while the electronics of the lighting fixture, may be received through the second opening 25.

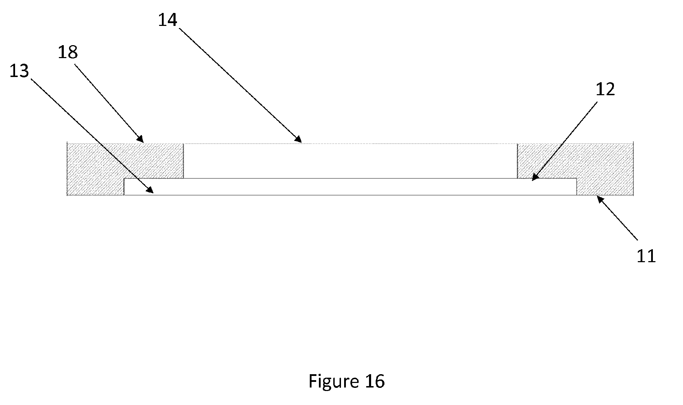

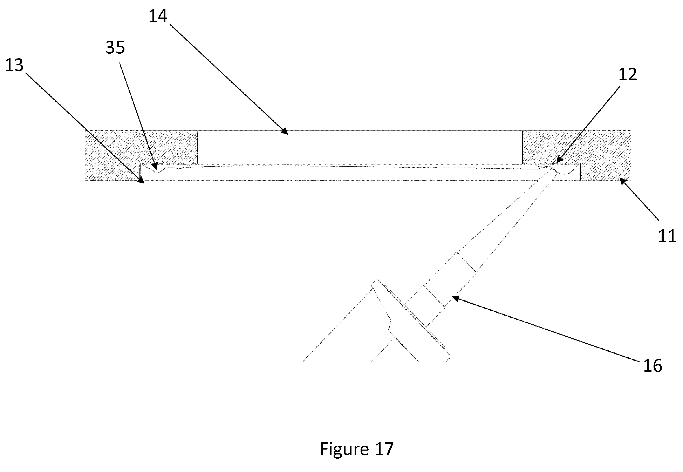

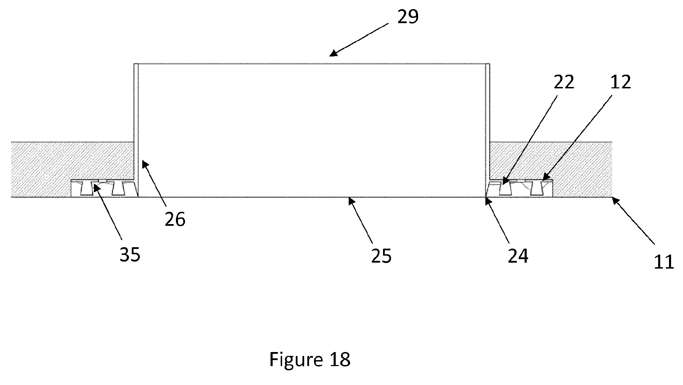

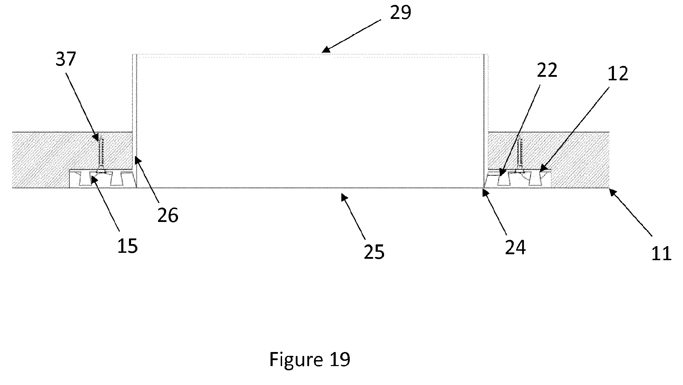

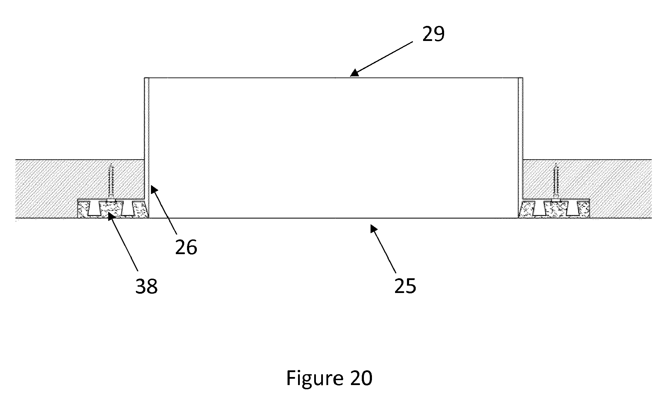

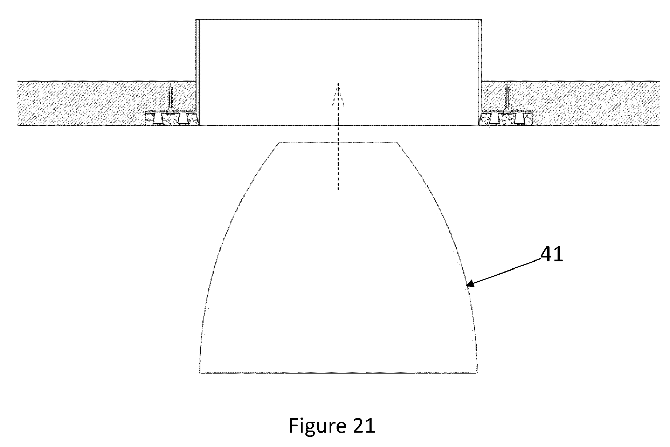

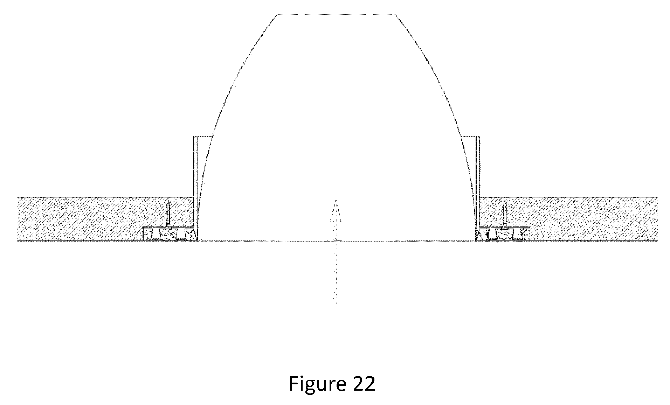

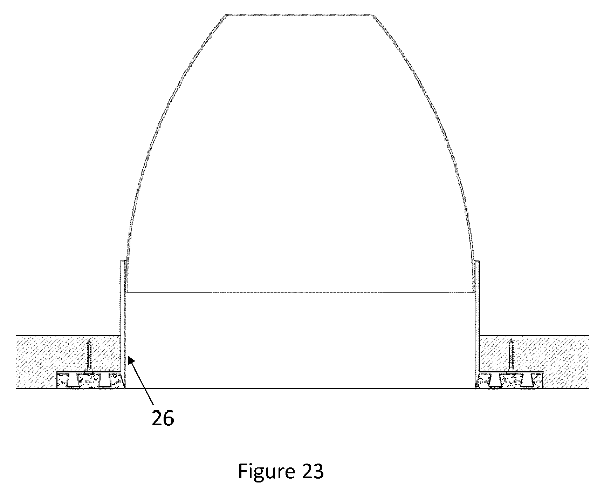

Figures 16 to 23 show the steps of an exemplified method for seamlessly mounting an apparatus on a stepped hole of a supporting surface 10, which may form at least part of a wall, ceiling, or floor, of an interior and/or exterior space. In a first step, shown in figure 16, a supporting surface 10 may be provided, such as the one shown in figure 1, comprising a stepped hole arranged for receiving a profile 20, such as the one shown in figures 2 to 12. In a second step, as shown in figure 17, a layer of an adhesive material 35 may be applied on an abutting surface of the flange recess 12 of the stepped hole, which abutting surface is arranged for coming in contact with the back surface 28 of the stopping flange 21. Once the adhesive 35 has been placed on the desired location in the stepped hole, e.g. on the abutting surface of the flange recess 12, the profile 20 may be inserted through the stepped hole, such that stopping flange 21 abuts the abutting surface of the flange recess 12 of the stepped hole, as shown in figure 18, and the outer rim 24 of the profile's hollow body is on substantially the same plane as the outer edge of the first opening 13. In this step, the alignment of the profile 20 with respect to the front side of the front side 11 of the supporting surface 10 may be adjusted, e.g. by using a tool such as a level, to gently apply pressure on the profile, so as to finely adjust the depth of the profile 20 in the stepped hole until the outer rim 24 is substantially on the same plane as the front side 11 of the supporting surface 10 in all directions. Due to the pressure applied, the adhesive material 35 may be compressed, resulting in some of the adhesive material 35 to leak though the holes 23 from the back surface 28 to the front surface of the stopping flange, as shown in figure 16. As a result, due to the adhesive material 35 being present in both the back and the top surface of the stopping flange 21, a better fixation of the profile 20 may be achieved. In a further step, a screw may further be screwed through the holes 23 on the flange recess 12 of the stepped hole, so as to improve the fixation of the profile 20, as shown in figure 19. Once the profile 20 has been aligned with the front surface 11 of the supporting surface 10 and fixed in the desired location within the stepped hole, a plaster layer 38 or another spackling compound may be provided on the front surface of the stopping flange 21 or over the entire front side 11 of the supporting surface 10. The plaster layer 38 is then made flush, e.g. by using a plaster trowel, with the front surface 11 of the supporting surface 10, as shown in figure 20. Once the profile 20 has been positioned in the stepped hole, at least part of apparatus to be installed may be provided through at least one of the openings of the profile 20. For example, as shown in the figure 21, a part of the apparatus 31, such as the lighting fixture body, may be provided through a first opening 29 of the profile 20, while the electronics may be provided through a second opening 25 of the profile 20. In a final step, shown in figure 22, the part of the apparatus 31 or the apparatus itself may be mounted in the profile of the stepped hole, in such a way that it is flush with the outer rim 24 of the profile 20, thereby covering the surface 26 of the profile 20. Figure 23, shows another example, where after the installation of apparatus or at least part of the apparatus 34, at least part of the surface 26 remains visible. As previously discussed, the visible surface 26 may be provided in a similar or different finish to that of the plaster layer 38 and/or the front side 11 of the supporting surface 10.

## Claims

1. A profile (20, 30) for seamlessly mounting an apparatus in a stepped hole extending through a supporting surface (10), which stepped hole comprises a flange recess (12) located between a first opening edge (13) and a second opening edge (14) located respectively on a front side (11) and a back side (18) of the supporting surface (10), wherein the front side (11) is arranged for receiving a finishing plaster layer (38) or another spackling compound, the profile (20, 30) comprising:
a hollow body comprising a stopping flange (21) radially protruding from an outer surface (27) of the hollow body and arranged, when the hollow body is inserted through the stepped hole, for abutting the flange recess (12) of the stepped hole; and
securing means (35, 37) arranged for securing the profile (20, 30) to the stepped hole of the supporting surface (10);
**characterised in that** the hollow body comprises an outer rim (24) arranged, when the stopping flange (21) is in contact with the flange recess (12), for being on substantially the same plane with an edge of the first opening (13), such that the outer rim (24) becomes flush with the front side (11) of the supporting surface (10), when the finishing plaster layer (3 8) is applied.

2. A profile (20, 30) according to claim 1, wherein the stopping flange (21) comprises a plurality of through holes (23) arranged for cooperating with the securing means (35, 37) so as to secure the profile (20, 30) to the stepped hole.

3. A profile (20, 30) according to claim 1, or 2, wherein the stopping flange (21) comprises a plurality of protrusions (22) arranged for extending outwardly from a front surface of the stopping flange (21).

4. A profile (20, 30) according to claim 3, wherein at least some of the protrusions (22) are arranged for extending longitudinally or radially over a predetermined distance along the front surface of the stopping flange (21).

5. A profile (20, 30) according to any one of the preceding claims wherein the protrusions (22) are arranged for funning out from the front surface of the stopping flange.

6. A profile (20, 30) according to any one of the preceding claims, wherein the securing means (35, 37) comprises an adhesive material (35), which is applied between the flange recess (12) surface and a back surface (28) of the stopping flange (21), which is positioned opposite the front surface, arranged for cooperating with the holes (23) provided on the stopping flange (21) for securing the profile (20, 30) on the stepped hole.

7. A profile (20, 30) according to any one of the preceding claims, wherein the hollow body comprises a surface (26), which remains visible after the finishing plaster layer (38) is applied on the front side (11) of the supporting surface (10).

8. A profile (20, 30) according to claim 7 wherein the visible surface (26) of the hollow body has substantially identical finishing to that of the plaster layer (38).

9. A profile (20, 30) according to any one of the preceding claims, wherein the profile (20, 30) is arranged for receiving an apparatus, such as a light fixture, a smoke detector, a speaker, and the like through at least one opening (of the25, 29) of the hollow body.

10. A profile (20, 30) according to any one of the preceding claims, wherein the supporting surface (10) comprises plaster, such as for example plasterboard.

11. A set of parts for seamlessly mounting an apparatus on stepped hole of a supporting surface (10), the set of parts comprising;
a drill bit arrangement arranged for creating a stepped hole in the supporting surface, which stepped hole comprises a flange recess (12) located between a first opening (13) and a second opening (14) of the stepped hole; and
a profile (20, 30) according to any one of claims 1 to 10 arranged for being mounted on the stepped hole.

12. A supporting surface comprising a stepped hole arranged for receiving a profile (20, 30) according to claims 1 to 10.

13. A method for seamlessly mounting an apparatus on a stepped hole of a supporting surface using a profile (20, 30) according to claims 1 to 10, the method comprising:
providing a supporting surface (10) comprising a stepped hole comprising a flange recess (12) located between a first opening edge (13) and a second opening edge (14) located respectively on a front side (11) and a back side (18) of the supporting surface (10), wherein the front side (11) of the supporting surface (10) is arranged for receiving a finishing plaster layer (38);
providing a profile (20, 30) according to claims 1 to 10;
inserting the profile (20, 30) through the stepped hole until the stopping flange (210 abuts the flange recess (12) of the stepped hole and the outer rim (24) of the profile's hollow body is on substantially the same plane as the outer edge of the first opening (13);
securing the profile (20, 30) on the stepped hole; and
providing a finishing plaster layer (38) on the front side of the supporting surface (10) such that the outer rim (24) becomes flush with the front side of the supporting surface (10).

14. A method according to claim 13, wherein the step of securing the profile (20, 30) comprises the step of applying a layer of adhesive (35) in between the surface of the flange recess (12) and the surface of the stopping flange (21) arranged for abutting the flange recess surface.

15. A method according to claims 13 or 14, wherein the step of securing comprises the step of screwing on at least some of the holes (23) a screw (37).
